# EUROPÄISCHE PATENTSCHRIFT

(11) **EP 1 735 671 B1**
(45) Veröffentlichungstag und Bekanntmachung des Hinweises auf die Patenterteilung: **28.07.2010**
(21) Anmeldenummer: 05729843.2
(22) Anmeldetag: 14.04.2005
(51) Int. Cl.: G05B 19/418

(54) **VERFAHREN ZUM FERNBEDIENEN EINES FELDGERÄTES DER PROZESSAUTOMATISIERUNGSTECHNIK**
METHOD FOR REMOTELY OPERATING A FIELD DEVICE OF PROCESS AUTOMATION TECHNOLOGY
PROCEDE POUR COMMANDER A DISTANCE UN DISPOSITIF DE CHAMP D'UNE TECHNOLOGIE D'AUTOMATISATION DE PROCESSUS

(30) Priorität: 16.04.2004 DE 102004019253
(43) Veröffentlichungstag der Anmeldung: 27.12.2006
(73) Patentinhaber: CodeWright GmbH, 76137 Karlsruhe (DE)
(72) Erfinder: VETTER, Immanuel, 76547 Sinzheim (DE); GUNZERT, Michael, 76863 Herxheim (DE); BIRKHOFER, Rolf, 76228 Karlsruhe (DE)
(74) Vertreter: Andres, Angelika Maria
(86) Internationale Anmeldenummer: PCT/EP2005/051658
(87) Internationale Veröffentlichungsnummer: WO 2005/101149

(56) Entgegenhaltungen:
- WO-A-03/046674
- "profibus journal passage" PROFIBUS JOURNAL, PROFIBUS NUTZERORGANISATION, KARLSRUHE, DE, 1. Juli 2001 (2001-07-01), Seiten 1-12, XP002272346
- FDT JOINT INTEREST WORKING GROUP: "FDT Interface Specification Version 1.2" FDT-JOINT INTEREST GROUP GUIDELINE, Mai 2001 (2001-05), XP002330295
- M&M: "M&M Update"[Online] März 2004 (2004-03), XP002354060 Gefunden im Internet: URL:http://www.mm-software.de/docs/mmupdat e_042004_ni_0.pdf> [gefunden am 2005-11-15]

## Beschreibung

Die Erfindung betrifft ein Verfahren zum Fernbedienen eines Feldgerätes der Prozessautomatisierungstechnik.

In der Prozessautomatisierungstechnik werden vielfach Feldgeräte eingesetzt, die zur Erfassung und / oder Beeinflussung von Prozessvariablen dienen. Beispiele für derartige Feldgeräte sind Füllstandsmessgeräte, Massendurchflussmessgeräte, Druck- und Temperaturmessgeräte, pH-Redoxpotential- Messgeräte, Leitfähigkeitsmessgeräte etc., die als Sensoren die entsprechenden Prozessvariablen Füllstand, Durchfluss, Druck, Temperatur, pH-Wert bzw. Leitfähigkeitswert erfassen.

Neben derartigen reinen Messgeräten sind auch Systeme bekannt, die noch zusätzliche weitere Aufgaben erfüllen. Zu nennen sind hier Elektrodenreinigungssysteme, Kalibriersysteme sowie Probennehmer.

Ebenfalls als Feldgeräte werden Ein-/Ausgabeeinheiten sogenannte Remote I/Os bezeichnet.

Zur Beeinflussung von Prozessvariablen dienen sogenannte Aktoren, z. B. Ventile, die den Durchfluss einer Flüssigkeit in einem Rohrleitungsabschnitt steuern oder Pumpen, die den Füllstand in einem Behälter verändern.

Eine Vielzahl solcher Feldgeräte wird von der Firma Endress + Hauser® hergestellt und vertrieben.

Häufig sind Feldgeräte über einen Feldbus (Profibus®, Foundation®-Fieldbus, HART® etc.) mit übergeordneten Einheiten z. B. Leitsystemen bzw. Steuereinheiten verbunden. Diese übergeordneten Einheiten dienen zur Prozesssteuerung, Prozessvisualisierung, Prozessüberwachung.

Zur Bedienung der Feldgeräte sind entsprechende Bedienprogramme (Bedientools) notwendig. Diese Bedienprogramme können eigenständig ablaufen (Endress+Hauser FieldCare) oder aber auch in Leitsystem-Anwendungen (Siemens Step7, ABB Symphony) integriert sein.

Eine eingeschränkte Bedienung von Feldgeräten ist mit herkömmlichen vielfach in der Prozessautomatisierungstechnik verwendeten Gerätebeschreibungen (Device Descriptions) möglich.

In der WO 03/046674 A1 wird ein Verfahren zum Datenaustausch zwischen einem Feldgerät und einem Funktelefon beschrieben. Insbesondere wählt der Anwender mit seinem Funktelefon das Leitsystem an und fordert über das Leitsystem Information über ein spezielles Feldgerät an. Das Leitsystem stellt die gewünschte Information als WML-Seite zur Verfügung. Diese Information wird auf dem Display des Funktelefons, das als WAP-Client dient, dargestellt. Neben der Darstellung von Messkurven ist auch die grafische Unterstützung bei der Parametrierung und Konfigurierung des Feldgeräts sinnvoll. Die Parametrierung bzw. Konfigurierung der Felgeräte erfolgt entweder vom Leitsystem aus oder von einem Bediengerät das entweder direkt an das Feldgerät oder an den Datenbus angeschlossen ist. Die Daten selbst werden verschlüsselt über ein öffentliches Netz übertragen, so dass ein unbefugter Zugriff auf jeden Fall verhindert wird.

Für eine vollumfängliche Bedienung der Feldgeräte müssen alle Funktionen und Parameter einschließlich der graphischen Bedienelemente dem Bedienprogramm (Bedientool) bekannt gemacht werden.
Dies ist über spezielle Gerätetreiber DTM (Device Type Manager), die den FDT (Field Device Tool)-Spezifikationen entsprechen, möglich.

Die als Industriestandard geltenden FDT-Spezifikationen wurden von der PNO Profibus® Nutzerorganisation in Zusammenarbeit mit dem ZVEI (Zentralverband Elektrotechnik- und Elektronikindustrie) entwickelt. Die aktuelle FDT-Spezifikation 1.2 ist über den ZVEI bzw. die PNO bzw. die FDT-JIG Joint Interest Group erhältlich.

Viele Gerätehersteller liefern deshalb für diese komfortablere Art der Bedienung seit kurzem zu ihren Feldgeräten als DTM (Device Type Manager) bezeichnete Gerätetreiber, die alle Daten und Funktionen des jeweiligen Feldgeräts kapseln und gleichzeitig eine graphische Benutzeroberfläche zur Verfügung stellen.

Mit Hilfe dieser Gerätetreiber ist eine geräte- und herstellerübergreifende Bedienung von Feldgeräten mit entsprechenden Bedienprogrammen möglich.

Die Gerätetreiber benötigen als Laufzeitumgebung eine Rahmen-Applikation (FDT-Frame-Application). Sie ermöglichen u. a. einen Zugriff auf verschiedene Daten der Feldgeräte (z.B. Geräteparameter, Messwerte, Diagnoseinformationen, Statusinformationen etc.) sowie den Aufruf von speziellen Funktionen, die einzelne Gerätetreiber zur Verfügung stellen

Beschrieben werden entsprechende Ausgestaltungen in dem Zeitschriftenartikel "profibus journal passage" Profibus Journal, Profibus Nutzerorganisation, Karlsruhe, DE, 1. Juli 2001, Seiten 1-12, XP002272346 und in dem Zeitschriftenartikel der FDT Joint Interest Working Group "FDT Interface Specification Version 1.2" FDT-Joint Interest Group Guideline, Mai 2001, XP002330295.

Rahmen-Applikation und Gerätetreiber DTM arbeiten nach dem Client-Server Prinzip.

Heutige Client-Server-Systeme die in der Prozessautomatisierungstechnik zum Bedienen von Feldgeräten mit den zugehörigen Bussystemen eingesetzt werden, benötigen eine hohe Rechenleistung und einen großen Speicherbedarf, so dass sie nur auf größeren Rechnereinheiten wie lokalen Industrie-Rechnern (Industrie-PCs) oder Servern eingesetzt werden können. Eine Nutzung derartiger Bedienprogramme auf einem portablen Kleinrechner wie PDA (personal digital assistent) oder Pocket PC ist nicht möglich.

Aufgabe der Erfindung ist es deshalb ein Verfahren zum Fernbedienen von Feldgeräten anzugeben, das mit einem Kleinrechner mit geringer Rechenleistung und geringem Speicherbedarf durchführbar ist.

Gelöst wird diese Aufgabe durch das im Anspruch 1 angegebene Verfahren.

Vorteilhafte Weiterentwicklungen sind in den Unteransprüchen angegeben.

Die wesentliche Idee der Erfindung besteht darin, dass eine Client-Applikation, die auf einem Handbediengerät (Kleinrechner) abläuft, mit einem Bedienprogramm für Feldgeräte, das auf einer größeren Rechnereinheit abläuft, über eine Service-Dienst-Schnittstelle kommuniziert, wobei das Bedienprogramm eine Rahmen-Applikation umfasst, die zum herkömmlichen Bedienen von Feldgeräten mittels entsprechender Gerätetreiber nach dem Client-Server-Prinzip dient und ein Service-Dienst-Treiber in der Rahmen-Applikation implementiert ist, der die Kommunikation zwischen Bedienprogramm und Service-Dienst-Schnittstelle ermöglicht.

Dadurch kann von einem Handbediengerät aus in einfacher Weise ein Feldgerät der Prozessautomatisierungstechnik komfortabel bedient werden. Die Kommunikation zwischen Handbediengerät und Rechnereinheit kann z. B. über ein lokales Funknetzwerk WLAN oder über eine Bluetooth-Verbindung mit Hilfe eines Standardprotokolls SOAP (Simple Object Access Protocol) erfolgen.

Nachfolgend ist die Erfindung anhand eines in der Zeichnung dargestellten Ausführungsbeispiels näher erläutert.

Es zeigen:
- Fig. 1: schematische Darstellung eines Netzwerks der Prozessautomatisierungstechnik mit mehreren Feldgeräten;
- Fig. 2: schematische Darstellung einer herkömmlichen Kommunikations- verbindung zwischen einem Bedienprogramm und mehreren Feldgeräten;
- Fig. 3: schematische Darstellung einer erfindungsgemäßen Kommunikationsverbindung zwischen einem Handbediengerät und mehreren Feldgeräten.

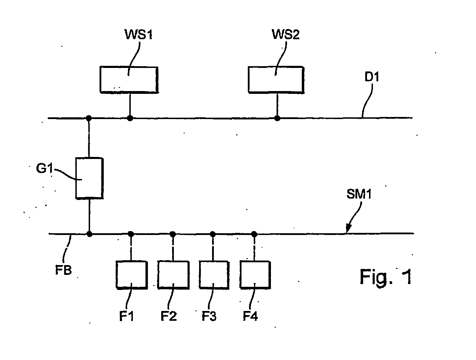

In Fig. 1 ist ein Kommunikationsnetzwerk der Prozessautomatisierungstechnik näher dargestellt. An einen Datenbus D1 sind mehrere Rechnereinheiten (Workstations) WS1, WS2 angeschlossen. Diese Rechnereinheiten können als übergeordnete Einheiten (Leitsystem bzw. Steuereinheit) zur Prozessvisualisierung, Prozessübenrvachung und zum Engineering aber auch zum Bedienen und Überwachen von Feldgeräten dienen. Der Datenbus D1 arbeitet z. B. nach dem Profibus® DP-Standard oder nach dem HSE (High Speed Ethernet)- Standard der Foundation® Fieldbus. Über ein Gateway 1, das auch als Linking Device oder als Segmentkoppler bezeichnet wird, ist der Datenbus D1 mit einem Feldbussegment SM1 verbunden. Das Feldbussegment SM1 besteht aus mehreren Feldgeräten F1, F2, F3, F4 die über einen Feldbus FB miteinander verbunden sind. Bei den Feldgeräten F1, F2, F3, F4 können es sich sowohl um Sensoren oder um Aktoren handeln. Der Feldbus FB arbeitet entsprechend nach einem der bekannten Feldbus-Standards Profibus, Foundation Fieldbus oder HART.

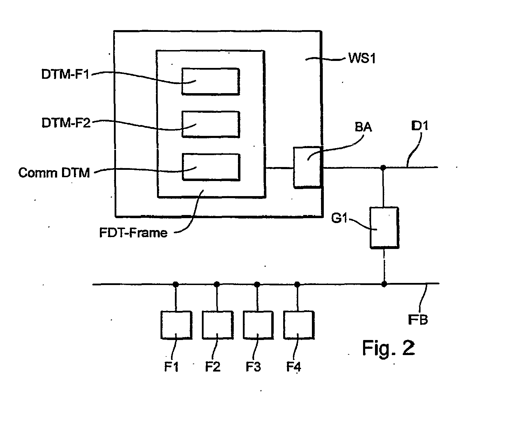

In Fig. 2 ist ein Bedienprogramm, das auf einer der Steuereinheiten WS1, WS2 bzw. auf der Bedieneinheit abläuft, schematisch dargestellt. Bei dem Bedienprogramm kann es sich um die Bediensoftware PACTware (PACTware Consortium e.V.) oder FieldCare® (Firma Endress + Hauser®) handeln, die beide als Betriebssystem Microsoft Windows®, 98NT, 2000 benötigen und die als FDT-Frame-Applikation dienen. Die Rahmen-Applikation FDT-Frame ist insbesondere verantwortlich für die Verwaltung der Gerätetreiber DTM in einer Projektdatenbank (projekt database) für die Kommunikation zu den Bussystemen, für die Verwaltung des Gerätekatalogs, sowie für die Verwaltung der Benutzer und der Zugriffsrechte etc..

In die Rahmen- Applikation FDT-Frame sind mehrere Gerätetreiber implementiert. Der Übersichtlichkeit halber sind nur zwei Geräte-DTMs DTM-F1, DTM-F2 und ein Kommunikations-DTM CommDTM dargestellt. Beispielsweise kapselt der Geräte-DTM DTM-F1 die Daten und Funktionen des Feldgerätes F1 und benötigt als Laufzeitumgebung die FDT-Frame-Applikation. Mit Hilfe der Gerätetreiber DTMs ist eine geräte- und herstellerübergreifende Bedienung der Feldgeräte sowie der Kommunikationsverbindung möglich. So erlaubt der Gerätetreiber DTM-F1 Zugriff auf Geräteparameter, Gerätekonfiguration, Abruf von Diagnosedaten und Statusinformationen über eine herstellerspezifische graphische Benutzeroberfläche.

Das FDT-Konzept basiert darauf, dass in eine FDT-Frame-Applikation unterschiedliche Feldgeräte von unterschiedlichen Herstellern über die entsprechenden Geräte-DTMs in einfacher Weise gebunden werden können. Hardwaremäßig erfolgt die Verbindung über eine Busanschaltung BA, den Datenbus D1, das Gateway G1, den Feldbus FB zum Feldgerät F1.

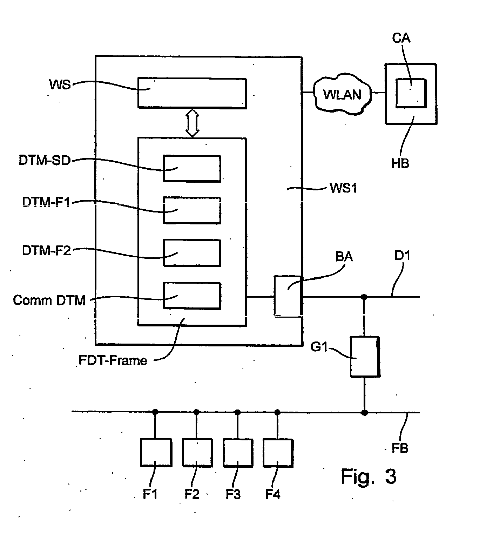

Fig. 3 ist schematisch die erfindungsgemäße Kommunikationsverbindung zwischen einem Handbediengerät HB und mehreren Feldgeräten dargestellt. Im Unterschied zur Fig. 2 ist ein Service-Dienst-Treiber DTM-SD vorgesehen, der entsprechend den DTM-Spezifikationen ausgebildet ist. Weiterhin ist in der Rechnereinheit WS1 ein Web Service WS als Service-Dienst-Schnittstelle implementiert. Das Handbediengerät HB, auf dem die Client-Applikation abläuft ist über ein lokales Funknetzwerk WLAN mit der Rechnereinheit WS1 verbunden.
Die Client-Applikation CA kommuniziert mit dem Web Service WS nach dem Standard protokoll SOAP. Der Service-Dienst-Treiber DTM-SD ist als Standard FDT1.2 DTM in einen FDT-Container der FDT-Frame-Applikation integriert. Nach der Projektierung besteht die Möglichkeit des Zugriffs vom Handbediengerät HB auf alle Gerätetreiber DTM in der Rahmen-Applikation FDT-Frame.
Sowohl der Web Service WS als auch der Service-Dienst-Treiber DTM-SD können als Microsoft NET-Komponente ausgebildet sein.
Der Web Service WS weist eine konfigurierbare URL(Uniform Resource Locator)-Adresse und einen konfigurierbaren Port auf, dessen WSDL (Web Service Description Language) Schnittstellenbeschreibung via URL-Adresse verfügbar ist. Der Zugriff auf die einzelnen Gerätetreiber DTM in der Rahmen-Applikation FDT-Frame erfolgt über das WLAN-Netzwerk. Somit können vom Handbediengerät HB aus alle Feldgeräteinformationen wie Hersteller, Typ, Version angezeigt werden. Weiterhin können vom Handbediengerät HB aus Geräteparameter der einzelnen Feldgeräte ausgelesen bzw. gesetzt werden. Auch der Diagnosezustand der Feldgeräte (z. B. F1, F2, F3, F4) kann vom Handbediengerät HB aus abgefragt werden. Weiterhin sind Up- und Downloads von Geräteparametern, Abfrage und Start von in den einzelnen Gerätetreibern DTM definierten Funktionen sowie eine Navigation über die gesamte Gerätetopologie möglich.

Auch eine einfache Visualisierung ist auf dem Handbediengerät möglich. Über FDT-konforme Erweiterungen bestimmter Gerätetreiber DTM sind webbasierte Präsentationen möglich. Ein Gerätetreiber DTM realisiert dazu die notwendige Schnittstelle, die .NET Plug-Ins sowohl auf der Seite vom Web Service WS als auch auf Seiten der Client-Applikation CA bereitstellt. Der serverseitige Plug-In wird beim Start der entsprechenden DTM-Funktion vom Web Service WS instanziert und als Web Service unter einer eigenen URL-Adresse publiziert. Die Client-Applikation CA erhält beim Start dieser DTM-Funktion die URL-Adresse dieses Web Services, dessen Dienste dann direkt von der Client-Applikation CA in Anspruch genommen werden können.

Die Client-Applikation CA startet einen clientseitigen Plug-In auf dem Handbediengerät HB. Dieser DTM-spezifische Plug-In greift direkt auf seinen vom Server-Plug-In bereitgestellten Web Service zu, der die proprietären Schnittstellen seines Gerätetreibers DTM verwendet. Der Client-Plug-In stellt die DTM-Informationen in Form eines .NET-Dialoges auch auf dem Handbediengerät HB dar. Die Plug-Ins kommunizieren direkt über das Standardprotokoll SOAP mittels des DTM-proprietären Web Services.
Als Betriebssystem für das Handbediengerät HB ist z.B. Windows CE denkbar.
Möglich ist auch der Zugriff auf den Service-Dienst DTM von beliebigen SOAP-Protokoll kompatiblen Clients aus. Als Beispiele sind zu nennen Java Clients oder die Integration in Webserver und Zugriff über Standard Webbrowser.

## Patentansprüche

1. Verfahren zum Fernbedienen eines Feldgerätes (F1) mit einer Client-Applikation (CA), die auf einem Handbediengerät (HB) abläuft und einem Bedienprogramm (PactWare, FieldCare), das auf einer Rechnereinheit (WS1, WS2) abläuft und das eine als FDT-Frame-Applikation ausgestaltete Rahmen-Applikation (FDT-Frame) umfasst, die zum herkömmlichen Bedienen von Feldgeräten (F1) mittels entsprechender Gerätetreiber (DTM-F1) nach dem Client-Server-Prinzip dient,
wobei die Kommunikation zwischen der Client-Applikation (CA) und dem Bedienprogramm (PactWare, Fieldcare) über eine Service-Dienst-Schnittstelle (WS) erfolgt, und wobei ein Service-Dienst-Treiber (DTM-SD), der der DTM-Spezifikation entspricht und in einem FDT-Container der FDT-Frame-Applikation integriert ist, für die FDT-Rahmen-Applikation (FDT-Frame) verwendet wird und die Kommunikation zwischen dem Bedienprogramm (PactWare, FieldCare) und der Service-Dienst-Schnittstelle (WS) ermöglicht.

2. Verfahren nach Anspruch 1, wobei die Service-Dienst-Schnittstelle ein Web Service (WS) ist, der gemäß einem Standardprotokoll z. B. SOAP mit der Client-Applikation (CA) kommuniziert.

## Claims

1. Method for the remote operation of a field device (F1) with a client application (CA), which runs on a handheld terminal (HB), and with an operating program (PactWare, FieldCare), which runs on a computer unit (WS1, WS2), and which comprises a frame application designed as an FDT frame application (FDT frame) which is used for the conventional operation of field devices (F1) using appropriate device drivers (DTM-F1) based on the client-server principle,
where the communication between the client application (CA) and the operating program (PactWare, Fieldcare) takes place via a service interface (WS), and where a service driver (DTM-SD), which complies with the DTM specification and is integrated in an FDT container of the FDT frame application, is used for the FDT frame application (FDT Frame) and enables communication between the operating program (PactWare, FieldCare) and the service interface (WS).

2. Method as per Claim 1, where the service interface is a Web service (WS) which communicates with the client application (CA) as per a standard protocol, SOAP for instance.

## Revendications

1. Procédé destiné à la commande à distance d'un appareil de terrain (F1) avec une application client (CA), qui tourne sur un appareil de commande portatif (HB) et un programme d'exploitation (PactWare, FieldCare), qui tourne sur une unité d'ordinateur (WS1, WS2) et qui comprend une application cadre (FDT-Frame) conçue en tant qu'application cadre FDT, laquelle application sert à la commande conventionnelle d'appareils de terrain (F1) au moyen d'un pilote d'appareil (DTM-F1) approprié, d'après le principe client-serveur,
la communication entre l'application client (CA) et le programme d'exploitation (PactWare, FieldCare) étant réalisée via une interface de service (WS) et un pilote de service (DTM-SD), qui répond à la spécification DTM et est intégré dans un container FDT de l'application cadre FDT, étant utilisé pour l'application cadre FDT (Frame FDT) et permettant la communication entre le programme d'exploitation (PactWare, FieldCare) et l'interface de service (WS).

2. Procédé selon la revendication 1, pour lequel l'interface de service est un service Web (WS), qui communique avec l'application client CA conformément à un protocole standard, p. ex. SOAP.
